# EUROPEAN PATENT SPECIFICATION

(11) **EP 1 612 434 B1**
(45) Date of publication and mention of the grant of the patent: **02.05.2007**
(21) Application number: 05105749.5
(22) Date of filing: 28.06.2005
(51) Int. Cl.: F16C 9/04, F16C 7/02, B23D 31/00

(54) **Method for cracking a motor connection rod, and the relative connecting rod**
Verfahren zum Bruchtrennen eines Motorpleuels und entsprechendes Pleuel
Procédé de fracture d'une bielle de moteur et bielle correspondante

(30) Priority: 28.06.2004 IT MI20041300
(43) Date of publication of application: 04.01.2006
(73) Proprietor: IVECO S.p.A., 10156 Torino (IT)
(72) Inventor: Zitella, Massimiliano, 10126 Torino (IT); Brandizzi, Junio, 10036 Settimo Torinese (IT)
(74) Representative: Borsano, Corrado

(56) References cited:
- DE-A- 10 203 444
- US-A- 5 460 776
- US-A- 6 125 536
- PATENT ABSTRACTS OF JAPAN vol. 018, no. 366 (M-1636), 11 July 1994 (1994-07-11) -& JP 06 099318 A (TOYOTA MOTOR CORP), 12 April 1994 (1994-04-12)

## Description

This invention relates to a method for cracking a motor connecting rod, and the connecting rod so obtained.

The conventional connecting rod manufacturing process comprise the step of separating the big end cap from the main part of the connecting rod by means of a cracking process called cracking.

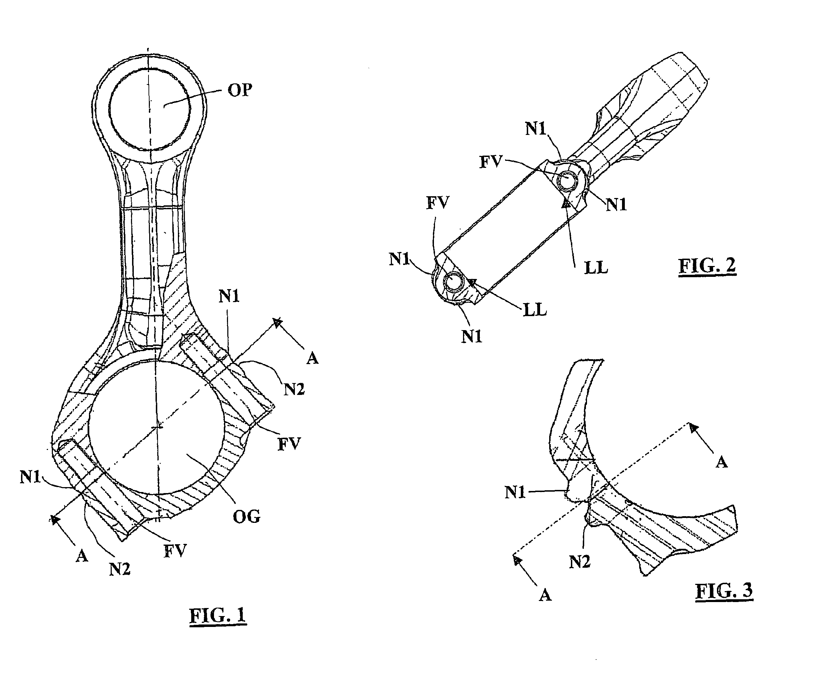

The cracking process comprises first defining a cracking plane on the big end (plane A-A in fig. 1), for example placed at approximately 40° in relation to the axis of symmetry of the connecting rod, by means of laser scribing to create the parting line on the two inside edges of the big end in correspondence with the plane A-A (lines LL in fig. 2). Scribing is usually performed using a pulse laser with a cutting depth of approximately 0.4 - 0.6 mm.

A wedge member is then inserted into the big end bore and subjected to an impulsive force towards the inside of the bore, thus causing the big end to split into two parts along the cracking plane. While force is being applied to the wedge, the connecting rod is held still on an horizontal reaction plane. The resulting cracked surface is irregular, as the cracking follows the flaw lines in the crystal lattice of the material used to make the connecting rod, which may, for example, be sintered steel.

However, this method guarantees a strong bonding of the two parts when rejoined. The two cracked surfaces do not undergo any further machining or finishing processes, since they match perfectly, even though both surfaces are uneven, with the exception of some small fragments of material that may break off the surfaces as a result of the cracking.

Said fragments break off the surface for the following reason.

During the cracking process, the cracking lines start from the inside edge of the big end (from the lines cut by the laser), towards the outside. At this stage in the manufacturing process the holes for the screws, which pass through the cracking plane, have already been drilled in the two sides of the big end. Therefore, in correspondence with the holes, the cracking line splits into two parts that follow the two edges of the holes. As they move outwards, the two parts of the cracking may follow two slightly different cracking planes, due to imperfections in the material, and when they meet up on the outside edge of the hole they tend to form fragments of material that break away, since they lie between the two cracking planes.

The cracking line must not deviate from the theoretical plane by more than a given maximum value (for example ± 2 mm), while the breakaway surface of the fragments must not exceed a certain maximum value (for example 5 mm²), otherwise the connecting rod will be of no use and must be discarded.

This is a problem, since the conventional cracking process described above produces a high reject rate.

The purpose of this invention is to solve the problems described above with an improved method for cracking a connecting rod, and the relative connecting rod, in order to overcome the problems of manufacturing with high reject rates.

This invention relates to a method for cracking a motor connecting rod, said connecting rod comprising a big end on which the cracking is effected along a cracking plane, characterized by comprising a step in which stiffening ribs made of the same material that is used to make the connecting rod are formed on the outside of said big end, round the theoretical cracking line according to said cracking plane, so that the outside surface of the connecting rod has two thickened sections extending parallel sidewise said theoretical cracking line, between which there is a central section with minimum thickness on said theoretical cracking line.

In particular, this invention relates to an improved method for cracking a connecting rod, and the relative connecting rod, as described more fully in the claims.

The purposes and advantages of this invention will become clear from the following detailed description of a preferred embodiment and the drawings that are attached hereto, which are merely illustrative and not limitative, in which:
figure 1 is a cross-sectional front view of a connecting rod according to this invention;
figure 2 is a cross-sectional view along the plane A-A in fig. 1;
figure 3 is an enlarged view of part of the connecting rod crossed by the plane A-A;
figures 4, 5 and 6 are further views of the connecting rod, respectively an axonometric, side and partial view.

In the drawings the same reference numbers and letters are used to identify the same elements.

The basic idea of the present invention is adding two stiffening ribs to the profile of the connecting rod on both sides of the theoretical cracking plane, in order to guide the path of the cracking and confine this to the depression between the two stiffening ribs, so as to reduce any deviation from the theoretical path to a minimum.

An evident advantage of this method is that a zero reject rate can be achieved, as any deviation from the theoretical cracking path must necessarily fall within the prescribed tolerances, as must the maximum breakaway surface of the fragments of material.

Moreover, all connecting rods behave in the same way, regardless of the type of material that is used or the geometry of the connecting rod.

The method according to the present invention comprises the following steps:
With reference to the drawings, according to the present invention, in a first step in the connecting rod manufacturing process two stiffening ribs N1, N2 are formed, made out of the same material that is used to make the connecting rod on the outside of the big end of the connecting rod, round the theoretical cracking line (plane A-A), so that the outside surface has two thickened sections between which there is a central section with minimum thickness. The cracking line will thus follow the line with the cross-section with minimum thickness, along the plane A-A, illustrated more clearly in the enlarged view in fig. 3.

Afterwards other known steps are performed, such as creating the small and big end OG and OP, and the two holes FV for the screws in the sides of the big end OG. Next the two laser cuts are performed as described above, using a pulse laser, to create the parting line for triggering the cracking (see lines LL in fig. 2).

Preferably the stiffening ribs have a semi-circular or sinusoidal cross-section (fig. 3), but other cross-sections are not excluded.

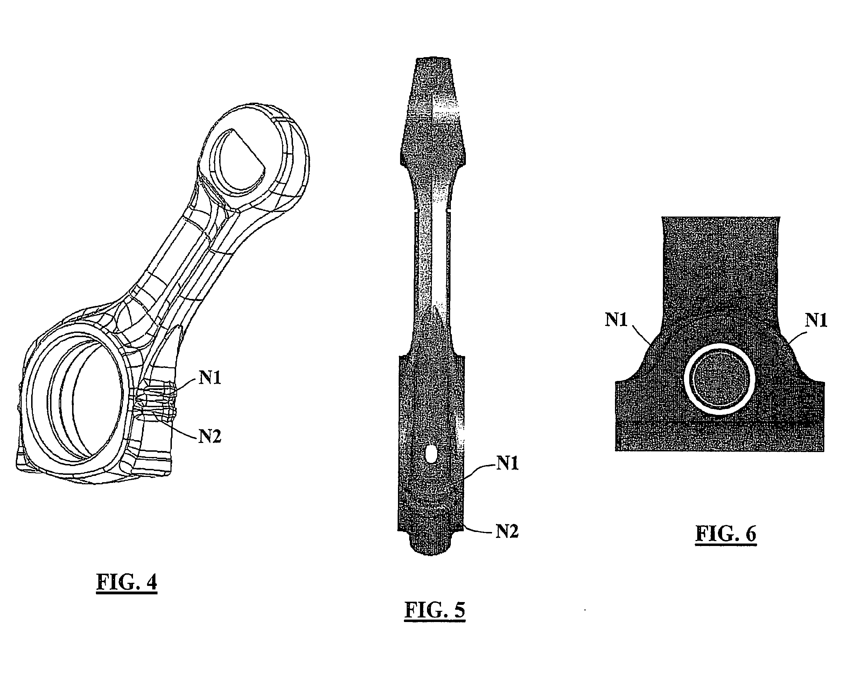

The stiffening ribs cover all or most of the outside profile of the big end, as illustrated more clearly in fig. 5 or in the enlarged view in fig. 6.

The cracking is then performed using a wedge member, as described above. Thanks to the two stiffening ribs N1, N2, the cracking lines follow the central line with the small cross-section, from the inside edge of the big end towards the outside edge, very close to the theoretical line of the plane A-A.

Upon completion of the cracking operation, other final machining processes are performed, for example to finish the various parts of the connecting rod.

From the description set forth above it will be possible for the person skilled in the art to embody the invention without introducing any further construction details.

## Claims

1. Method for cracking a motor connecting rod, said connecting rod comprising a big end (OG) on which said cracking is performed along a cracking plane (A-A),
**characterized by** comprising a step in which stiffening ribs (N1, N2) made of the same material that is used to make the connecting rod are formed on the outside of said big end (OG), round the theoretical cracking line on said cracking plane (A-A), so that the outside surface of the connecting rod has two thickened sections extending parallel sidewise said theoretical cracking line, between which there is a central section with minimum thickness on said theoretical cracking line.

2. Method for cracking a connecting rod according to claim 1, **characterized in that** said cracking performed along a cracking plane (A-A) is such that the path of said cracking is confined to said central section with minimum thickness on said theoretical cracking line.

3. Method for cracking a connecting rod according to claim 1, **characterized in that** said stiffening ribs have a semi-circular or sinusoidal cross-section.

4. Method for cracking a connecting rod according to claim 1, **characterized in that** said stiffening ribs cover all or most of the outside profile of said big end.

5. Connecting rod, said connecting rod comprising a big end (OG) on which a cracking must be performed along a cracking plane (A-A), **characterized by** comprising stiffening ribs (N1, N2) made of the same material that is used to make the connecting rod on the outside of such big end (OG), round the theoretical cracking line on said cracking plane (A-A), so that the outside surface of the connecting rod has two thickened sections extending parallel sidewise said theoretical cracking line, between which there is a central section with minimum thickness on said theoretical cracking line.

6. Connecting rod according to claim 5, **characterized in that** said stiffening ribs have a semi-circular or sinusoidal cross-section.

7. Connecting rod according to claim 5, **characterized in that** said stiffening ribs cover all or most of the outside profile of said big end.

## Patentansprüche

1. Verfahren zum Bruchtrennen eines Motorpleuels, wobei das genannte Pleuel einen Pleuelstangenfuß (OG) umfasst, an welchem das genannte Bruchtrennen längs einer Bruchtrennebene (A-A) ausgeführt wird,
**dadurch gekennzeichnet, dass** das Verfahren einen Arbeitsschritt umfasst, bei welchem Versteifungsrippen (N1, N2), welche aus demselben Material hergestellt sind, das für die Herstellung des Pleuels verwendet wird, an der Außenseite des genannten Pleuelstangenfußes (OG) auf der genannten Bruchtrennebene (A-A) um die theoretische Bruchtrennlinie herum dergestalt ausgebildet sind, dass die Außenfläche des Pleuels seitlich der genannten theoretischen Bruchtrennlinie zwei verdickte Abschnitte aufweist, welche sich parallel erstrecken und zwischen denen ein mittlerer Abschnitt mit einer minimalen Dicke auf der genannten theoretischen Bruchtrennlinie vorhanden ist.

2. Verfahren zum Bruchtrennen eines Pleuels gemäß Anspruch 1, **dadurch gekennzeichnet, dass** das genannte Bruchtrennen längs einer Bruchtrennebene (A-A) dergestalt ausgeführt wird, dass der Verlaufsweg des genannten Bruchtrennens auf diesen genannten mittleren Abschnitt mit minimaler Dicke auf der genannten theoretischen Bruchtrennlinie beschränkt ist.

3. Verfahren zum Bruchtrennen eines Pleuels gemäß Anspruch 1, **dadurch gekennzeichnet, dass** die genannten Versteifungsrippen einen halbkreisförmigen oder einen sinusförmigen Querschnitt aufweisen.

4. Verfahren zum Bruchtrennen eines Pleuels gemäß Anspruch 1, **dadurch gekennzeichnet, dass** die genannten Versteifungsrippen das gesamte Außenprofil des genannten Pleuelstangenfußes oder dessen größten Teil überdecken.

5. Pleuel, wobei das genannte Pleuel einen Pleuelstangenfuß (OG) umfasst, an welchem ein Bruchtrennen längs einer Bruchtrennebene (A-A) ausgeführt werden muss, **dadurch gekennzeichnet, dass** es um die theoretische Bruchtrennlinie herum auf der genannten Trennbruchebene (A-A) Versteifungsrippen (N1, N2), welche aus dem gleichen Material gefertigt sind, das zur Herstellung des Pleuels an der Außenseite dieses Pleuelstangenfußes (OG) verwendet wird, dergestalt umfasst, dass die Außenfläche des Pleuels zwei verdickte Abschnitte aufweist, welche sich parallel beiderseits der genannten theoretischen Bruchtrennlinie erstrecken und zwischen denen auf der genannten theoretischen Bruchtrennlinie ein mittlerer Abschnitt mit minimaler Dicke vorhanden ist.

6. Pleuel gemäß Anspruch 5, **dadurch gekennzeichnet, dass** die genannten Versteifungsrippen einen halbkreisförmigen oder sinusförmigen Querschnitt aufweisen.

7. Pleuel gemäß Anspruch 5, **dadurch gekennzeichnet, dass** die genannten Versteifungsrippen das gesamte Außenprofil des genannten Pleuelstangenfußes oder dessen größten Teil überdecken.

## Revendications

1. Procédé de fracture d'une tige de connexion de moteur, ladite tige de connexion comprenant une grande extrémité (OG) sur laquelle ladite fracture est exécutée le long d'un plan de fracture (A-A),
**caractérisé en ce qu'**il comprend une étape dans laquelle des nervures de renforcement (N1, N2) réalisées dans le même matériau qui est utilisé pour fabriquer la tige de connexion sont formées sur l'extérieur de ladite grande extrémité (OG), autour de la ligne de fracture théorique sur ledit plan de fracture (A-A) de sorte que la surface extérieure de la tige de connexion présente deux sections épaissies s'étendant parallèlement transversalement à ladite ligne de fracture théorique, entre lesquelles il se trouve une section centrale avec une épaisseur minimale sur ladite ligne de fracture théorique.

2. Procédé de fracture d'une tige de connexion selon la revendication 1, **caractérisé en ce que** ladite fracture exécutée le long d'un plan de fracture (A-A) est telle que le trajet de ladite fracture est confiné à ladite section centrale d'une épaisseur minimale sur ladite ligne de fracture théorique.

3. Procédé de fracture d'une tige de connexion selon la revendication 1, **caractérisé en ce que** lesdites nervures de raidissement ont une section transversale semi-circulaire ou sinusoïdale.

4. Procédé de fracture d'une tige de connexion selon la revendication 1, **caractérisé en ce que** lesdites nervures de renforcement couvrent l'ensemble ou la plus grande partie du profil extérieur de ladite grande extrémité.

5. Tige de connexion, ladite tige de connexion comprenant une grande extrémité (OG) sur laquelle une fracture doit être exécutée le long d'un plan de fracture (A-A), **caractérisée en ce qu'**elle comprend des nervures de renforcement (N1, N2) réalisées dans le même matériau qui est utilisé pour réaliser la tige de connexion à l'extérieur d'une telle grande extrémité (OG), autour de la ligne de fracture théorique sur ledit plan de fracture (A-A), de sorte que la surface extérieure de la tige de connexion présente deux sections épaissies s'étendant parallèlement transversalement à ladite ligne de fracture théorique, entre lesquelles se trouve une section centrale d'une épaisseur minimale sur ladite ligne de fracture théorique.

6. Tige de connexion selon la revendication 5, **caractérisée en ce que** lesdites nervures de renforcement ont une section transversale semi-circulaire ou sinusoïdale.

7. Tige de connexion selon la revendication 5, **caractérisée en ce que** lesdites nervures de renforcement couvrent l'ensemble ou la plus grande partie du profil extérieur de ladite grande extrémité.
